# EUROPEAN PATENT APPLICATION

(11) **EP 1 482 122 A1**
(43) Date of publication of application: **01.12.2004**
(21) Application number: 04076578.6
(22) Date of filing: 27.05.2004
(51) Int. Cl.: E06B 7/23

(54) **Sealing device for a door or the like**

(30) Priority: 28.05.2003 NL 1023562
(71) Applicant: Industrie en Handelsonderneming Elton B.V., 9301 LL Roden (NL)
(72) Inventor: Visser, Hendrik Koop, 9305 Roderesch (NL); Wessels, Arnoldus Cornelis, 9717 LT Groningen (NL)
(74) Representative: Winckels, Johannes Hubertus F.

(57) **Abstract**

A sealing device (1) for a door (2) or the like, comprising an inflatable sealing (8) operatively connected with the door (2) or the like, for sealing chinks (21) between the door (2) or the like and a bordering (20, 30) around the door (2) or the like, and an inflating device (6, 7) for inflating the sealing (8). The sealing device (1) comprises an on/off switch (11), included in an electric circuit, for operatively switching the inflating device (6, 7) automatically on and off upon the door (2) or the like entering and leaving a closed position, respectively.

## Description

The invention relates to a sealing device for a door or the like, comprising an inflatable sealing operatively connected with the door or the like, for sealing chinks between the door or the like and a bordering around the door or the like, and an inflating device for inflating the sealing. The invention also relates to such a sealing, as well as to a door or the like provided with such a sealing device or sealing.

Such sealing devices are used for sealing doors against, for instance, draft, moisture, dirt, insects and the like. The inflatable sealing can provide for an effective sealing, possibly all around a door, and in many cases renders the use of a raised threshold superfluous. In practice, however, the use of such sealing devices often has associated drawbacks with regard to, for instance, the design of the devices or their user-friendliness.

Thus, United States patent specification 4,706,413 discloses a sealing device which is suitable in particular to prevent smoke penetrating a room in case of fire. This known sealing device comprises an inflatable sealing connected with the circumferential edge of a door, as well as a source of compressed air, mounted on the door, for inflating the sealing. Further, the sealing device known from US 4,706,413 comprises a smoke detector mounted on the door. In case of detection of smoke, the sealing is automatically inflated with the aid of the compressed air, so that chinks between door and door frame are sealed. In order to facilitate opening of the door in the inflated condition of the sealing, the sealing device comprises a manually operable button which is especially intended for deaerating the sealing. This button is on the room side of the door.

A drawback of this known sealing device for a door is that it is not suitable for automatic sealing in response to conditions other than the detection of smoke. The fact is there is often a need for a sealing device for a door that seals automatically, for instance each time when the door has closed or each time when the door has closed and is also locked. Another drawback of the sealing device known from US 4,706,413 is that it is not particularly user-friendly to require that a button especially intended for deaerating the sealing be pressed to enable a door with inflated sealing to be opened. Thus, it is a drawback that the known device requires the user to be familiar with the presence and the operation of the button. Further, in the dark, the button may be difficult to find, and in the design described in US 4,706,413, the button is situated in a place that is difficult to access for, for instance, small people. Also, the button cannot be operated from the outside of the door. Another drawback of the known device is that in addition to the sealing means proper, other components of the sealing device are mounted in or on the door, which can entail unwanted additional requirements to be met by the construction of the doors, or may be less appreciated by some people from an esthetic point of view.

German patent specification 28 51 459 B also discloses a sealing device for a door. This known device comprises an inflatable sealing which communicates via a connecting duct with a first coupling piece situated in a connecting part situated on the door edge. The connecting duct is provided in the door. The coupling piece is adapted to be coupled with a second coupling piece which is connected with a frame part. The second coupling piece is connected to a shut-off valve for compressed air. Further, the device comprises a three-way valve whose position is determined by the position of a door handle. A first connection of the three-way valve is connected with the inflatable sealing, a second connection with the ambient air, and a third connection, via the connecting duct and the connecting part, with the shut-off valve for the compressed air. The door handle operates the three-way valve via an eccentric connected with a shaft of the door handle. In this device, therefore, a number of the components mentioned, such as the eccentric, the three-way valve, the connecting duct and the connecting part, are mounted in or on the door.

Further, European patent specification 1,154,118 A discloses a sealing device for preventing water nuisance, as in the case of floods. The device comprises an inflatable sealing in a slot of a door edge. The inflatable sealing is provided with a supple and deformable strip. This strip is designed to be pressed firmly against a door frame or threshold in order to arrest water. The known device further comprises a control unit for the inflatable sealing. The control unit comprises a keyboard. In case of a flood, via this keyboard, a code can be entered, after which the sealing is inflated.

Furthermore, United States patent specification 4,665,653 A discloses a sealing device for ship's doors or hatches. This known device is provided with an inflatable sealing which is connected with the door frame. The inflatable sealing is intended to be activated in particular conditions of increased water pressure on the doors, as, for instance, when sailing in heavy weather or in case of leakage.

Further, United States patent specification 6,195,941 B1 discloses a sealing device for a safety door, in particular for a sterile space. The device comprises an inflatable sealing connected with the door. As the door closes, the sealing is automatically inflated, such that the sealing locks the door through the frictional forces between the sealing and the door frame. To determine whether the door has closed and in response the sealing can be inflated, use is made of a proximity switch. To be able to open the door, first a push button needs to be operated.

The object of the invention is to obviate the drawbacks outlined, and generally to provide a sealing device for a door, whereby the sealing is automatically inflated and deaerated in a user-friendly and effective manner, depending on changes in conditions with regard to open, closed, locked or unlocked state of the door and whereby, apart from the inflatable sealing; the components of the sealing device do not need to be mounted in or on the door.

To that end, according to the invention, a sealing device of the above-described type is characterized by an on/off switch, included in an electric circuit, for operatively switching the inflating device automatically on and off upon the door or the like entering and leaving a closed position, respectively. An important advantage of the sealing device according to the invention is that it makes it possible, for one thing, to use an entirely planar passage in doors or the like. A further advantage is that the sealing device according to the invention can effectively continue to seal doors or the like after they have become warped or otherwise deformed.

Specific embodiments of the invention are laid down in the dependent claims.

In the following, the invention is further elucidated with'reference to the figures in the accompanying drawing.
Fig. 1 shows schematically an example of an embodiment of a sealing device for a door according to the invention.
Fig. 2 shows schematically a cross section of an edge of a door provided with an example of an inflatable sealing according to the invention in the rest condition.
Fig. 3 shows schematically in elevation a part of a door with door frame suitable for an inflatable sealing according to the invention.
Fig. 4 shows schematically a view in perspective of an example of a coupling element for a sealing device according to the invention.
Fig. 5 shows schematically a cross section of the coupling element of Fig.4, to which an inflatable sealing has been clamped.
Fig. 6 shows schematically the coupling element with sealing of Fig. 5 in a sealing condition, mounted on a door.

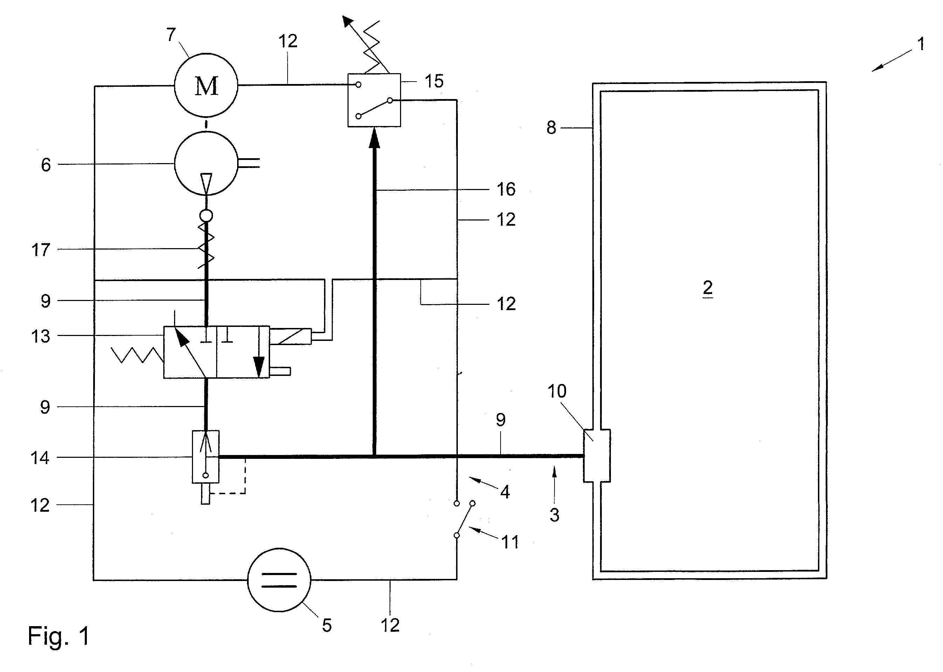

Presently, reference is first made to Fig. 1, showing an example of an embodiment of a sealing device 1 for a door 2 according to the invention. The sealing device 1 comprises an air duct circuit 3 and an electric current circuit 4. In this example, the electric circuit 4 comprises electric lines 12 and a DC-voltage source 5 of a suitable voltage, for instance 24 volts. The DC voltage source 5 can be realized, for instance, with the aid of an AC voltage source, transformer and rectifier. The air duct circuit 3 comprises an inflating device, in this example an air compressor 6 which is driven by an electric motor 7, in this example a DC current motor, included in the electric circuit 4. Instead of a compressor 6 and electric motor 7, the inflating device can also comprise, for instance, a pressure vessel or a cylinder-piston combination with for instance electromagnetically or electrically controllable piston, optionally for instance in combination with a suitable electrically controllable valve. The air duct circuit 3 further comprises an inflatable sealing 8 connected with the door 2. The sealing 8 is intended for sealing chinks between the door 2 and a bordering around the door 2, which bordering can comprise, for instance, a door frame and a floor surface. The sealing 8 comprises a flexible elongated hollow profile which extends around the circumferential edge of the door 2, such that the two ends of the profile are in communication with each other via a stiff coupling element 10 mounted on the circumferential edge of the door 2, for the purpose of air transport. Also, the air duct circuit 3 comprises an air duct 9, connected with the compressor 6, which, in closed condition of the door 2, is connected with the coupling element 10 for air transport. Thus, in closed condition of the door 2, the air duct 9 and the coupling element 10 enable air transport between the compressor 6 and the sealing 8. It is noted that in this example, when a closed door 2 opens, the connection of the air duct 9 to the coupling element 10 is broken in a manner to be described hereinafter in more detail.

The electric circuit 4 further comprises an electric on/off switch 11 for, during operation of the sealing device 1, switching the compressor 6 automatically on and off when the door 2 enters and leaves a particular closed position, respectively. When the on/off switch 11 is in the off position, the electric circuit 4 is interrupted. The on/off switch 11 can for instance be provided with an operating element which is mounted in a striker plate, situated in a door post, for a bolt of a lock of the door 2. Such a bolt can be, for instance, a day bolt or a night bolt of a door lock. The on/off switch 11 then cooperates with the bolt, such that the on/off switch 11 is in the 'on' position when the bolt reaches far enough into the striker, in which situation it is assumed that the door 2 is in the closed position. The on/off switch 11 is then in the 'off position if the bolt does not reach, or does not reach far enough, into the striker, in which situation it is assumed that the door 2 is not in the closed position. Naturally, the on/off switch 11 can be any type of suitable switch, for instance also a switch that cooperates with a suitable sensor.

That in this example the on/off switch 11 can cooperate with a day bolt or with a night bolt makes it possible to design the sealing device 1 to work on the basis of different conditions in which it is assumed that the door 2 is or is not in the closed position. To be taken as closed position is, for instance, the position in which the day bolt operates the on/off switch 11, but, for instance, also the position in which the night bolt operates the on/off switch 11. In the case of locks with night bolts where more than one locking position is possible depending on how far the night bolt reaches into a striker, additionally the different locking positions can be taken as closed position. It is also possible to arrange the sealing device 1 such that the sealing device 1, by means of suitable additional operating elements of the sealing device 1, is settable by the user in respect of the choice of the conditions under which it is assumed that the door 2 is or is not in the closed position.

The electric circuit 4 further comprises an electrically controllable pneumatic valve 13, known per se, which in this example is connected in parallel with the electric motor 7, such that the on/off switch 11 can function for switching on and off not only the electric motor 7 but also the valve 13. The valve 13 could possibly also be included in the electric circuit 4 in a different way, for instance such that a separate on/off switch is intended for switching the valve 13 on and off. The valve 13 is included in the air duct circuit 3, viz. in the air duct 9 between the compressor 6 and the coupling element 10. Between the compressor 6 and the valve 13, further, a suitable non-return valve 17 is included in the air duct circuit 3. The valve 13 is designed such that it is in closed or open condition if, respectively, a current does or does not flow through the coil of the valve 13. In open condition of the valve 13, the valve 13 can deaerate the air duct circuit 3. Since the sealing 8 forms part of the air duct circuit 3, the valve 13 is a deaerating means for deaerating the sealing 8 in the case where, in closed condition of the door 2, the air duct 9 is connected for air transport to the coupling element 10. In case of unforeseen power failure at a time when the door 2 is closed and the sealing 8 is inflated, the valve 13 opens of itself, whereupon the sealing 8 is deaerated automatically, so that the sealing 8 does not constitute any impediment to the opening of the door 2. If it is desirable that the sealing device 1 can continue to function in case of unforeseen power failure, possibly an emergency power supply can be used, for instance in the construction of the door 2.

In this example, an additional deaerating means for deaerating the sealing 8 is used in the form of a mechanical rapid deaerator 14, which is known as such and commercially available. In this example, the rapid deaerator 14 is included in the air duct 9 between the valve 13 and the coupling element 10. The rapid deaerator 14 has a substantially larger deaerating capacity than the valve 13 and is arranged to assume the deaerating position soon after the valve 13 has switched to its deaerating position. Further, the rapid deaerator 14 is so arranged as to be in closed condition when the sealing 8 is being inflated and in the inflated condition.

The electric circuit 4 furthermore includes an air pressure switch 15, known per se, which is connected in parallel with the valve 13 and connected in series with the electric motor 7. This air pressure switch 15 is intended for operatively switching the electric motor 7 automatically on and off, respectively, if an air pressure detected in the air duct circuit 3 falls below a predetermined switch-on pressure level, or exceeds a predetermined switch-off pressure level, respectively. In order that the air pressure switch 15 can detect the air pressure in the air duct circuit 3, the air duct circuit 3 comprises in this example a detection line 16 which connects the air pressure switch 15 with the air duct 9. The air pressure switch 15 is preferably so designed that both the switch-off pressure level and the difference between the switch-off pressure level and the switch-on pressure level, which pressure difference is also referred to as hysteresis, are settable. But an air pressure switch without settable hysteresis can also be used.

The purpose of the air pressure switch 15 operatively switching off the electric motor 7 automatically is to enable the compressor 6 driven by i the electric motor 7 to be switched off automatically as soon as the sealing 8 has been adjusted to a desired maximum pressure by the compressor 6. Therefore the switch-off pressure level is preferably to be tuned to the maximum pressure level in the sealing 8 desired for sealing. The purpose of the air pressure switch 15 operatively switching on the electric motor 7 automatically is to enable the compressor 6 to be automatically set into operation as soon as the air pressure in the sealing 8 has fallen to a level too low for proper sealing, for instance through the occurrence of some measure of leakage in the air duct circuit 3. Therefore, the hysteresis, depending on the set switch-off pressure level, should preferably be set such that the switch-on pressure level corresponds to the desired minimum pressure level in the sealing 8.

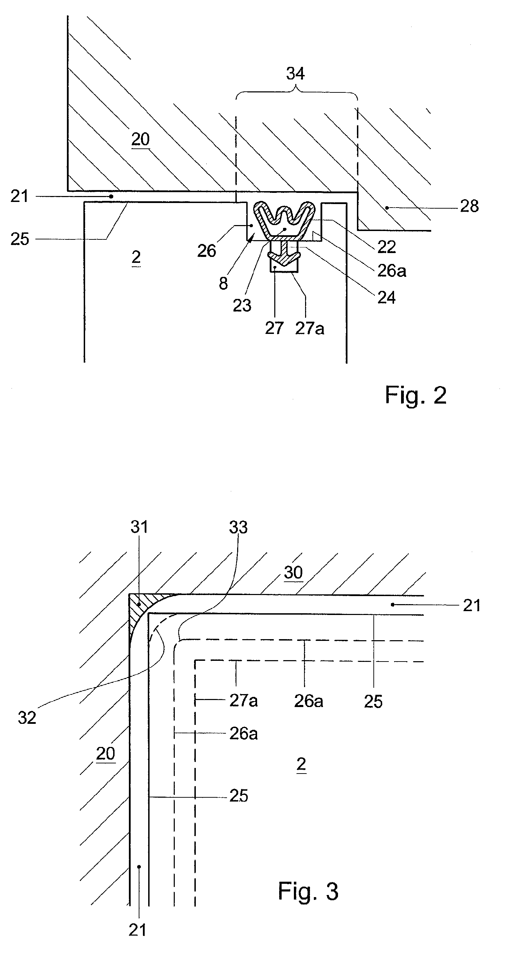

Reference is presently made to Fig. 2, showing a cross section of an edge of the door 2 provided with an example of an inflatable sealing 8 according to the invention in the rest condition. This edge of the door 2 is situated in the proximity of a bordering part 20 around the door. The bordering part 20 can be, for instance, a frame part or a threshold, or, for instance, a floor surface. In the following, it is assumed that the bordering part 20 is a door post 20. Between the door 2 and this door post 20 a chink 21 is present. The door post 20 is provided with a rebate with a protruding part 28. Opening the door is done in a direction away from the protruding part 28.

The sealing 8 is made of a suitable flexible material and in this example is formed such that an inflation chamber wall 22 for an inflation chamber 23 is present, as well as a solid, barb-like projection 24 which is connected with the inflation chamber wall 22. In this example, the inflation chamber wall 22 is creased such that the sealing 8 comprises three inflatable lobes on the side of the sealing 8 opposite the barb-like projection 24. The edge of the door 2 has an outer surface 25 facing the door post 20. From the outer surface 25, in the longitudinal direction of the edge of the door 2, a first rectangular slot 26 extends in the edge of the door 2, as far as a first slot bottom 26a. From the first slot bottom 26a, parallel to the first slot 26, a second rectangular slot 27 extends in the first rectangular slot 26 as far as a second slot bottom 27a. The barb-like projection 24 of the sealing 8 is clamped in the second rectangular slot 27 and the inflation chamber wall 22 is situated in the first rectangular slot 26. In inflated condition of the sealing 8, the inflation chamber wall 22 is so unfolded and stretched relative to the rest condition of the sealing 8 that the sealing 8 via the inflation chamber wall 22 is in contact with the door post 20, so that the chink 21 is sealed.

Reference is now made to Fig. 3, schematically showing an elevation of a top corner part of the door 2 with frame. The figures shows not only the door post 20 but also a horizontal lintel 30 of the frame, connected with the door post 20. Between the lintel 30 and the upper edge of the door 2, likewise a chink 21 is present. The upper edge of the door 2 also includes the above-mentioned first slot 26 with first slot bottom 26a and second slot 27 with second slot bottom 27a. To promote the chinks 21 in the corners of the door 2 being properly sealed by the sealing 8 which extends all around the circumferential edge of the door 2, a number of roundings have been applied in the corners of the door 2 and in the corners of the frame. Fig. 3 shows such roundings for the top corners shown, viz. the rounding 31 in the corner between the door post 20 and the lintel 30, the rounding 31 in the corner of the outer surface 25, and the rounding 33 in the corner of the first slot bottom 26a. In this example, the rounding 31 in the frame corner and the rounding 32 in the corner of the door's outer edge are only applied in a limited portion of the frame and the door edge in the cross-sectional direction of the frame and the door edge, that is, in a suitable portion 34 (see Fig. 2) which comprises a part within which the sealing 8 in inflated condition should be in contact with the frame. The rounding 31 in the frame corner can be realized, for instance, through the use of a suitable corner insert element. With a sealing 8 used for a first slot of a slot depth of 8 mm and for a second slot of a slot depth of 6.5 mm, suitable radii of curvature for the roundings 31, 32 and 33 are, for instance, 17 mm, 14 mm and 6 mm, respectively. That the sealing 8 comprises three inflatable lobes is advantageous in particular because of the fact that with these lobes, when using such roundings in the corners of the door 2, a relatively well sealing action in the corners is obtained at relatively small radii of curvature of the roundings.

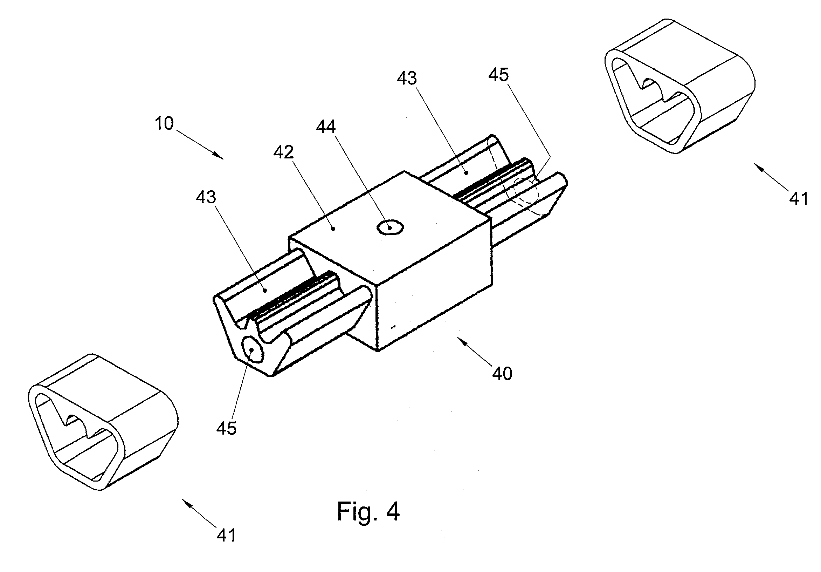

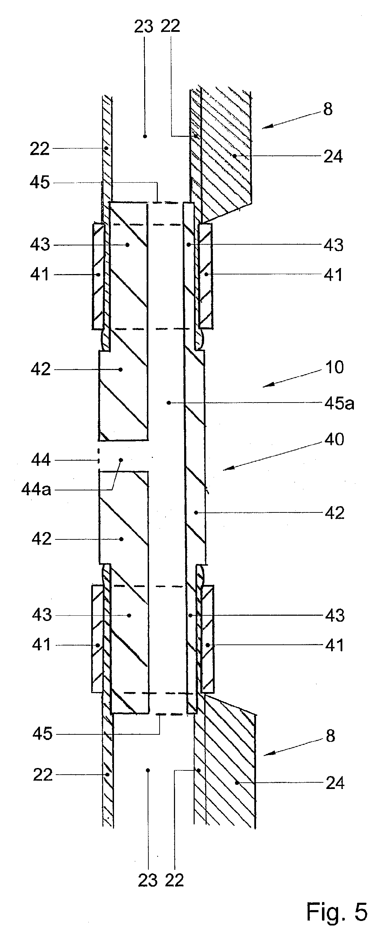

Reference is now made to Fig.4, showing an example of a stiff coupling element 10, to which the two ends of the flexible sealing 8 extending around the circumferential edge of the door 2 can be coupled. The coupling element 10 comprises a coupling body 40 and two clamping ring bodies 41. The coupling body 40 in this example is manufactured in one piece and with smooth surfaces, from a hard or soft plastic, but can also be manufactured in a different way, or from a different material, for instance metal. The coupling body 40 comprises a bar-shaped central portion 42, as well as two parts 43 projecting on either side of the central portion 42. In each end face of each of the two projecting parts 43, there is an opening 45. Between the two openings 45 extends a first passage 45a (see Fig. 5) through the coupling body 40. Further, situated centrally in a planar and rectangular side of the central portion 42 of the coupling body 40 is an opening 44 from which a second passage 44a (see Fig.5) extends through the central portion 42. This second passage 44a links up in the interior of the coupling body 40 with the first passage 45a through the coupling body 40, so that the first and second passage together form a T-shaped passage through the coupling body 40.

Each of the two projecting parts 43 has, in a cross section transverse to the first passage direction through the coupling body 40, an external contour which is approximately equal and of at least substantially identical shape to the internal cross-sectional contour of the inflation chamber wall 22 of the sealing 8 in the rest condition. As a result, the flexible sealing 8 can be slipped by its two ends over the projecting parts 43 of the coupling body 40. The two clamping ring bodies 41 which, in cross section, have an internal contour which is approximately equal and of at least substantially identical shape to the cross-sectional outer contour of the inflation chamber wall 22 of the sealing 8 in rest condition, can subsequently be slipped over the sealing 8 slipped over the coupling body 40. It is convenient here if in those parts of the sealing 8 over which the clamping ring bodies 41 are slipped, the barb-like projection 24 of the sealing 8 (see Fig. 2) is absent. If suitable dimensions of the projecting parts 43 and of the clamping ring bodies 41 are chosen, the sealing 8 can thus be firmly, and with a good sealing, clamped by its two ends onto the coupling element 10. Optionally, to promote a proper clamping action, it is possible to apply, in the sliding direction, a suitable, for instance tapered, configuration of the internal contours of the clamping ring bodies 41 and/or of the external contour of the projecting parts 43.

Reference is now made to Fig.5. This figure shows a cross section of the coupling element 10 onto which the inflatable sealing 8 has been clamped on either side. The cross section shown comprises the T-shaped passage 44a, 45a through the coupling body 40. Fig.5 thus shows how the inflation chamber 23 of the sealing 8, for the purpose of air transport, is in communication with the T-shaped passage which communicates via the opening 44 with the outside of the coupling element 10.

It follows from the above that the sealing 8, in a condition with its ends clamped to either end of the coupling element 10, can be inflated and deflated via the second opening 44 in the coupling element 10. One of the advantages of the use of the elongated flexible sealing profile 8 in combination with such a coupling element 10 is that the profile 8 can be made of a very great length, after which it can be cut, for instance from a roll, to any desired length for use on doors 2 of different dimensions.

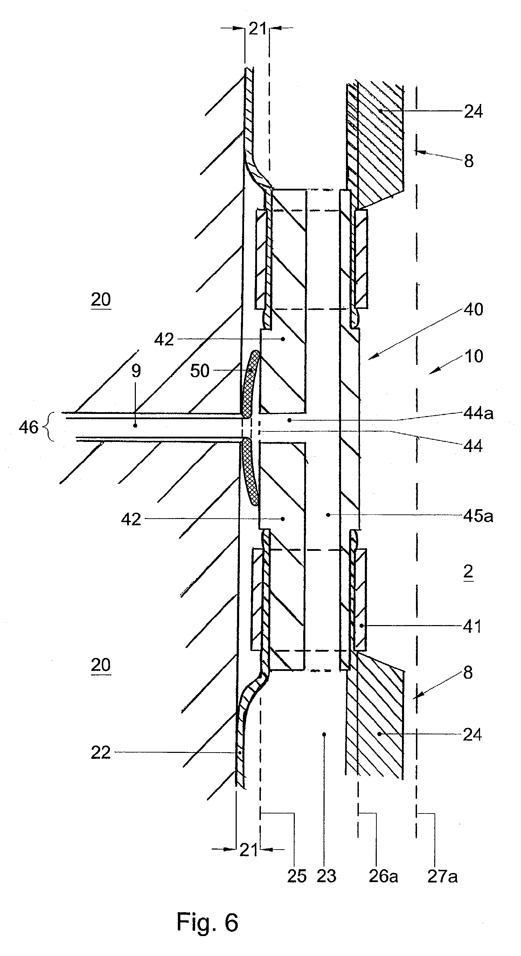

Referring now to Fig.6, there is again shown the cross section of the coupling element 10 with sealing 8 of Fig. 5. In this figure, the coupling element 10, together with the sealing 8 clamped thereon, is connected with the circumferential edge of the door 2. In the situation shown, the door 2 is closed, with a bordering around the door 2, of which a door post 20 is shown in Fig. 6. Between the door 2 and the door post 20, the chink 21 is present. The sealing 8 is in an operating condition in which the chink 21 is sealed. The manner in which the sealing 8 is connected with the circumferential edge of the door 2 has been described hereinabove with reference to Fig. 2. The coupling element 10 is situated in the first slot 26 with first slot bottom 26a, the coupling element 10 being so oriented that the opening 44 in the coupling body 40 faces the door post 20.

The door post 20 has a passage 46 for the air duct 9, which air duct 9 is connected in the air duct circuit 3 with the compressor 6, see Fig. 1. Instead of the passage 46, the door post 20 can also comprise, for instance, a suitable recess for the air duct 9. From the side of the door post 20 which faces the door 2, the air duct 9 reaches slightly into the chink 21. Preferably, the place of the termination of the air duct 9 in the chink 21 is such that the second opening 44 in the coupling body 40 is in line with the air duct 9 as well as possible. Adjacent the termination of the air duct 9, the air duct 9 in the chink 21 is enclosed by a sealing cup 50 of a suitable flexible material so as to be sealed from air. The portion of the sealing cup 50 that encloses the mouth of the air duct 9 abuts against the door post 20 and may possibly be fixed to the door post 20, for instance by means of glue or the like. In the direction facing the door, the sealing cup 50 has a dished form. The outer edge of the dished form of the sealing cup 50 presses, in an air-sealing manner, against the central portion 42 of the coupling body 40, such that the opening 44 in the coupling body 40 is enclosed by the sealing cup 50. The sealing contact between the sealing cup 50 and the coupling body 40 is promoted by the flexibility of the sealing cup 50 and in that the contact surface of the central portion 42 of the coupling body 40 is smooth and made of plastic.

If the door 2 is opened, the edge of the door 2 moves away from the door post 20 and the sealing contact between the sealing cup 50 and the coupling body 40 is broken. The connection of the air duct 9 to the coupling element 10 and the channel 44a is thereby broken as well. An advantage of this connection being breakable is that the sealing 8, with the door 2 open, cannot be inflated by the compressor 6, not even when a person or object operates the on/off switch, since in the latter case the supplied air is blown not into the sealing 8 but into free space. What is thus prevented, for instance, is that the sealing 8 can burst as a result of its being inflated while the door 2 is open. If the door 2 closes from an open position, the above-described connection of the air duct 9 to the coupling element 10 is reestablished.

That the connection of the air duct 9 to the coupling element 10, as the door 2 opens and closes, is automatically broken and reestablished in the manner described above, provides the advantage that the air duct circuit 3 and the electric circuit 4 do not need to be mounted in or on the door 2. With a sealing device 1 for e.g. a front door 2 of a house, the voltage source 5, the electric motor 7 and the compressor 6 can be placed, for instance, in the meter cupboard of the house.

The example of an embodiment of a sealing device 1 for a door 2 shown in Figs. 1-6 can function in practice, for instance, as follows. It is assumed here that the on/off switch 11 cooperates with the day bolt of a lock of the door 2, assuming as closed position the position in which the day bolt operates the on/off switch 11. It is further assumed that the door 2 is initially open, with the air pressure switch 15 in the 'on' position. Because with the door 2 open, the day bolt does not reach into the strike plate of the door post 20, the on/off switch 11 is in the 'off position, so that the valve 13 is in the open, that is, deaerating condition, and so that the electric motor is not in operation. As soon as the door 2 has been closed, on the one hand the sealing connection of the air duct 9 to the coupling element 10 has been established and on the other hand the day bolt has set the on/off switch 11 in the 'on' position. This last has as a result that, first, the valve 13 is set in the closed position and, secondly, the electric motor 7 is switched on. Through the operation of the air compressor 6, first the rapid deaerator 14 is set in the closed condition and subsequently the sealing 8 is inflated, so that the pressure in the air duct circuit 3 increases. As soon as the increasing pressure in the air duct 9 reaches the pre-set switch-off pressure level of the air pressure switch 15, the air pressure switch 15 switches to the 'off' position, so that the electric motor 7 and hence also the compressor 6 are switched off, so that the pressure in the air duct 9 does not rise further. The valve 13 then remains closed, and so does the rapid deaerator 14. The sealing 8 is now in the inflated or expanded condition intended for obtaining a sealing effect, whereby the sealing 8 can fix the door 2 to a greater or lesser extent with respect to frame and/or floor surface. If the position of the day bolt in the striker of the door post 20 does not change, the compressor 6 will only be switched on again by the air pressure switch 15 switching to the 'on' position as soon as, for instance in the course of time owing to the occurrence of some leakage, the air pressure in the air duct 9 has fallen below the pre-set switch-on pressure level.

Starting from the situation now obtained, in which the door 2 is closed and in the closed position, and in which the sealing 8 is inflated, it is now assumed that the door 2 leaves the closed position. In that case, first the day bolt is retracted from the striker of the door post 20. This is the case, for instance, when a door handle of the door 2 is moved by a user for the purpose of opening the door 2. Through retraction of the day bolt, the on/off switch 11 changes to the 'off position. On the one hand, this has as a consequence that the electric motor 7, if it should be in operation in that the air pressure switch 15 is in the 'on' position, is switched off. On the other hand, this has as a consequence that the valve 13 takes the deaeration position. This last has first as a consequence that when the pressure in the air duct 9 falls below the pre-set switch-on pressure level, the air pressure switch 15, if it should be in the 'off' position, switches to the 'on' position. This last, incidentally, does not'lead to the electric motor 7 coming into operation, since the on/off switch 11 is off. A subsequent result of the deaerating position of the valve 13 is that also the rapid deaerator 14 changes to the deaerating position. The sealing 8 is then rapidly deaerated, so that it does not constitute any impediment to the door 2 being opened.

It follows from the above that the sealing device according to the invention is particularly user-friendly. For operation, it will suffice for the user to perform the usual operations that are necessary for opening and closing doors and/or for locking and unlocking doors. For a proper operation of the sealing device, users do not need to be familiar with the presence and the operation of the sealing device.

It is noted that after the foregoing, various modifications will readily occur to those skilled in the art. Thus, the sealing device according to the invention can be similarly deployed for, for instance, a window or a hatch or the like instead of for a door. Also, various types of valves and/or rapid deaerators can be used at various places in the sealing device. Further, various types of sealing profiles are possible, which may be mounted on the door in various ways. Furthermore, the sealing does not need to extend all around a door, in which case for instance a coupling element can be used which is suitable for clamping just one end of a sealing profile. Also, several parts of the sealing device may be mounted in or on the door, in which cases for instance the use of a coupling element cooperating with a sealing cup need not be necessary. If, for instance, the inflating device is built-in in the door, then, instead of a coupling element in combination with a sealing cup, for instance a fixed connection between air duct and sealing can be used. Also if the air duct extends for instance through a passage in a door post from which the door has been hingedly suspended, use can be made of such a fixed connection, for instance in the form of flexible air duct parts which can change in length axially in the manner of an accordion. Furthermore, instead of a coupling element with flexible sealing cup, various other coupling systems between sealing and air duct can be used, for instance coupling systems which are coupled and uncoupled through (electro)mechanical operation, such operation for instance taking place automatically through the on/off switch.

Also, instead of a flexible cup, a snout on the door or the frame could be used which, upon closing of the door, pivots into a bore in the frame, or the coupling element, respectively. Further, it is possible in various ways to design the device so as to provide for additional conditions for inflating or deaerating the sealing or not. To be considered, for instance, is automatic inflation in case of smoke detection by a sensor, while deaeration is arranged for in the manner described for the door leaving a closed position. What can also be considered, however, is deaeration of the sealing actuated by an emergency operating element, while inflation of the sealing is arranged for in the manner described for the door entering a closed position. Furthermore, for the purpose of deaeration, the sealing can also be evacuated, for instance through reverse operation of the inflating device. This can provide the advantage that deaeration proceeds faster and more effectively. This also makes it possible, for instance, to (continue to) use an inflatable sealing profile whose mnemonic capacity to return from the inflated condition to the rest condition is (unduly) limited.

Another modification can be the use of a compressed air tank which is held under pressure by a compressor. In that case, possibly, different on/off switches, such as for instance the above-described on/off switch which responds to the door entering and leaving a closed position and, for instance, the above-described air pressure switch, can cooperate with the compressed air tank in various ways. Naturally, in various embodiments of the sealing device according to the invention, various components may be connected to various kinds of DC voltage sources or AC voltage sources.

These and similar modifications are'understood to fall within the framework of the invention as defined in the appended claims.

## Claims

1. A sealing device (1) for a door (2) or the like, comprising an inflatable sealing (8) operatively connected with the door (2) or the like, for sealing chinks (21) between the door (2) or the like and a bordering (20, 30) around the door (2) or the like, and an inflating device (6, 7) for inflating the sealing (8),
**characterized by** an on/off switch (11), included in an electric circuit, for operatively switching the inflating device (6, 7) automatically on and off upon the door (2) or the like entering and leaving a closed position, respectively.

2. A sealing device (1) according to claim 1, **characterized by** deaerating means (13, 14) for deaerating the sealing (8).

3. A sealing device (1) according to claim 2, wherein the deaerating means (13, 14) comprise an electrically controllable pneumatic valve (13).

4. A sealing device (1) according to claim 3, wherein the on/off switch (11) for the inflating device (6, 7) is also on/off switch (11) for the pneumatic valve (13).

5. A sealing device (1) according to any one of claims 2-4, wherein the deaerating means (13, 14) comprise a rapid deaerator (14).

6. A sealing device (1) according to any one of the preceding claims, **characterized in that** the door (2) or the like being, in the closed position or not is determined by the position of a closing bolt of a lock of the door (2) or the like and that the on/off switch (11) is operated by said closing bolt.

7. A sealing device (1) according to any one of the preceding claims, **characterized by** an air pressure switch (15) connected in series with the on/off switch (11) for the inflating device (6, 7), for operatively switching the inflating device (6, 7) automatically on and off when, respectively, an air pressure measured in the device (1) falls below a predetermined switch-on pressure level and an air pressure measured in the device (1) rises above a predetermined switch-off pressure level.

8. A sealing device (1) according to any one of the preceding claims, **characterized in that** in operation the inflating device (6, 7) is mounted remotely from the door (2) or the like.

9. A sealing device (1) according to claim 8, **characterized by** an air duct (9) coupled to the inflating device (6,7) for the purpose of air transport between inflating device (6, 7) and sealing (8), which air duct (9) extends at least partly through a passage (46) or recess in a frame (20, 30) forming part of the bordering around the door (2) or the like.

10. A sealing device (1) according to claim 9, **characterized by** a coupling element'(10) operatively coupled to the sealing (8), having at least one internal channel (44a, 45a) which is in communication with the interior (23) of the sealing (8), which coupling element (10) comprises an opening (44) which is in communication with the internal channel (44a, 45a), which opening (44), in closed condition of the door (2) or the like, is sealingly coupled with an end of the air duct (9) but in open condition of the door (2) is not coupled with this end.

11. A sealing device (1) according to claim 10, **characterized in that** for providing a connection between the air duct (9) and the opening (44), a dish-shaped cup (50) of flexible material is provided.

12. A sealing device (1) according to any one of the preceding claims, **characterized in that** the inflatable sealing (8) is a hollow sealing strip (8) which in cross section comprises at least a number of inflatable lobes.

13. A sealing device (1) according to claim 12, wherein the number of inflatable lobes is three.

14. A sealing device (1) according to any one of the preceding claims, **characterized in that** the inflatable sealing (8) is a sealing strip (8) which in cross section comprises a barb-like projection (24) for clamping of the sealing (8) in a slotted recess (26, 27) in the circumferential edge of a door (2) or the like.

15. An inflatable sealing (8) for a sealing device (1) according to any one of the preceding claims.

16. A door (2) or the like, provided with at least a part of a sealing device (1) according to any one of claims 1-14.

17. A door (2) or the like, provided with an inflatable sealing (8) according to claim 15.

18. A combination of door (2) or the like and frame (20, 30), provided with a sealing device (1) according to any one of claims 1-14, **characterized by** at least one rounding (32, 33) of at least one corner of the door (2) or the like and by a corner insert element (31) shaped complementarily to the rounding (32, 33) of the door (2) or the like and placed in the corner of the frame (20, 30) corresponding to said corner of the door (2) or the like.
